# EUROPEAN PATENT SPECIFICATION

(11) **EP 3 067 267 B1**
(45) Date of publication and mention of the grant of the patent: **28.11.2018**
(21) Application number: 14859632.3
(22) Date of filing: 16.04.2014
(51) Int. Cl.: B63B 35/08, B63H 5/08, B63H 5/125

(54) **ICEBREAKER FOR OPERATION PREFERABLY IN SHALLOW FREEZING WATER**
EISBRECHER ZUM BETRIEB VORZUGSWEISE IN FLACHEM GEFRIERENDEM WASSER
NAVIRE BRISE-GLACE UTILISABLE ESSENTIELLEMENT DANS DES EAUX GELÉES DE FAIBLE PROFONDEUR

(30) Priority: 06.11.2013 RU 2013149585
(43) Date of publication of application: 14.09.2016
(73) Proprietor: Krylov State Research Centre, St.Petersburg 196158 (RU)
(72) Inventor: APPOLONOV, Evgeny Mihailovich, St.Petersburg 192239 (RU); SAZONOV, Kirill Evgenievich, St.Petersburg 193231 (RU); BELIASHOV, Valerii Adamovich, St.Petersburg 196158 (RU); SIMONOV, Yury Andreevich, St.Petersburg 194354 (RU); SHTRAMBRANDT, Vladimir Ilich, Moscow 125252 (RU)
(74) Representative: Jeck, Anton
(86) International application number: PCT/RU2014/000277
(87) International publication number: WO 2015/069141

(56) References cited:
- WO-A1-2013/119175
- WO-A2-2009/007497
- DE-A1- 4 208 682
- KR-A- 20120 133 964
- RU-C1- 2 381 136
- RU-C1- 2 494 911
- RU-C2- 2 205 768
- RU-C2- 2 268 193
- RU-U1- 116 833

## Description

The invention relates to shipbuilding, and more specifically - to icebreakers and tug-boats intended for operation in ice in shallow water conditions.

The main problem of operation in ice-covered shallow water conditions is to provide the ship with required effective thrust to overcome ice resistance at limited draft, which is the reason for limiting the diameter of propellers and the power they effectively consume.

The RU 2 268 193 C2 teaches an icebreaker ship which is provided with an ice removal strip in the area of the rear on a flat portion of the around. This strip is wedge-shaped and the tapered end of the wedge is directed backwards. It is also provided with ice-breaking teeth mounted in front of and behind swinging propellers. They protrude below the level of the ice removal ramp.

Limitation of power consumed by the propulsor with specified diameter exists even at deep immersion. This is due to power limit because of severe cavitation onset at fixed propeller diameter resulting in sudden thrust breakdown and significant increase in unsteady hydrodynamic forces and vibration. In view of the requirement to obtain maximum possible propulsive thrust in order to achieve the highest icegoing capability almost every icebreaker is subject to the 1^{st} stage of cavitation that still does not cause thrust breakdown. At smaller draft, the cavitation intensifies due to propeller diameter restrictions and closer to the free surface operation, as well as extra risk of air penetration to the propeller (aeration).

Prior art discloses shallow-draft icebreaker ("Captain Evdokimov" type) for operation in shallow waters fitted with four conventional propellers mounted on the shafts symmetrically to ship's centerline (CL) (two propellers on each side) and two rudders located behind the central propellers presenting together a steering/propulsion system placed at stern overhang of the ship.

In this case, tips of propeller blades do not protrude beyond the base plane in height and the design waterline (DWL) in width at the given propeller locations.

However, the steering/propulsion system of the existing icebreaker does not ensure sufficient maneuverability of the ship to perform ice operations in constrained environment, especially during operations in the vicinity of offshore oil and gas facilities. Its aft end is not suitable for long-term icebreaking astern, the rudders affect astern ice performance of ship and often suffer damage; moreover, the propellers are poorly protected against ice loads. Such ship is not stable on course and less controllable in astern running mode. In addition, in some operating modes of propulors there is a possibility of air penetration to the propellers.

The proposed invention is aimed to improve maneuverability of the ship running both ahead and astern in constrained environment in ice and in open water, as well as to improve its icegoing capabilities and to effectively handle air penetration to the operating podded AZT propellers and ship propulsors.

For this purpose the icebreaker intended for operation preferably in shallow freezing waters comprising a hull with a sled-like stern overhang, having flat bottom and ice protection shield along the perimeter of the overhang, and podded propulsion system disposed in the overhang and comprising two side propulsors mounted on the shafts symmetrically to the ship's CL, and arranged with regard to hull height so that the propulsor's tip edges do not protrude beyond the ship's base plane and design waterline at the propellers' location, and, *according to the invention*, is fitted with two 360-degree azimuth thrusters (AZT) equipped with pulling propellers mounted on the AZT shafts in front of their pods with blade tip edges not protruding beyond the base plane and arranged symmetrically to the ship's CL displaced sternward, in such a way that the distance between the disks of AZT propellers and disks of side propulsors is not greater than the diameter of propulsor and the 360-degree turn of azimuth thruster about its axes with no contact to ship's propulsors is provided. In DWL area, the ship's stern overhang is of wedge-type icebreaking shape with 90° - 180° wedge angle along the DWL with its surface being inclined at no less than 30° to the vertical. An ice protection shield with wedge-shape cross section does not protrude beyond the ship's hull and is formed so as to extend in the bow direction beyond the disks plane of ship's side propulsors by the distance not greater than two diameters of the above-mentioned propulsors. Moreover, it has height at which the lower edge of the shield in the stern protrudes upwards from the rotation axes of AZT propellers at least by half the radius of these propellers.

Fitting the icebreaker with 360-degree azimuth thrusters results in improved maneuverability of the ship at the same effective power ensuring course keeping stability and controllability at astern running.

Installation of conventional propulsors at the sides of the icebreaker and the 360-degree azimuth thrusters - in the vicinity of ship's CL provides improved operating conditions for azimuth thrusters by protecting the same against possible contact with large-size ice features with the side propulsors rotating outboard and pushing away the major part of ice broken by the ship's hull.

The arrangement of AZT propellers and disks of ship propulsors so that the distance between them is not greater than one diameter of ship propulsor, makes it possible to minimize the effect of unsteady hydrodynamic forces from side propulsors' slipstreams acting on azimuth thruster.

Azimuth thruster fitted with pulling propellers provides the improvement in icebreaking capabilities of the ship especially at astern running and protects the AZT struts against damage.

Icebreaking shape of wedge-type stern hangout with the surface inclined at an angle of no less than 30° to the vertical contributes to breaking of ice by bending, pushing aside and submerging of ice segments at astern running, therefore, the icegoing capabilities of the ship at astern running improve.

Ice protection shield with wedge-shaped cross-section arranged in a way that it does not protrude beyond the ship's hull at all waterlines and extends in the bow direction beyond propulsors' disks more effectively prevents aeration (air penetration) occurrence and contributes to ice breaking.

The lower edge of the shield protruding upwards from the axes of AZT propellers by no less than half the radius of these propellers makes it possible to minimize the decrease in AZT propulsion performance caused by propulsors' slipstreams hitting the shield.

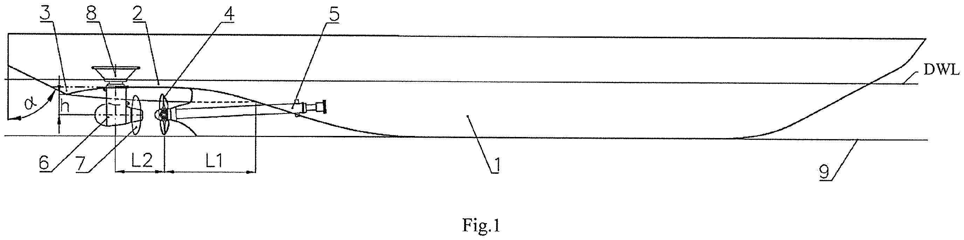

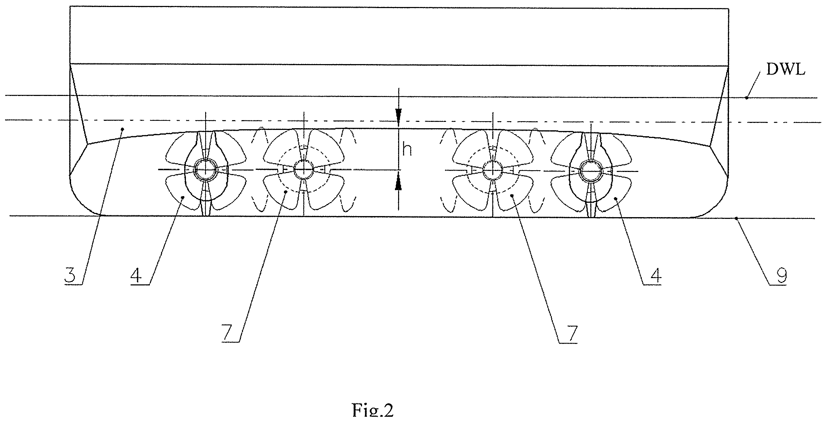

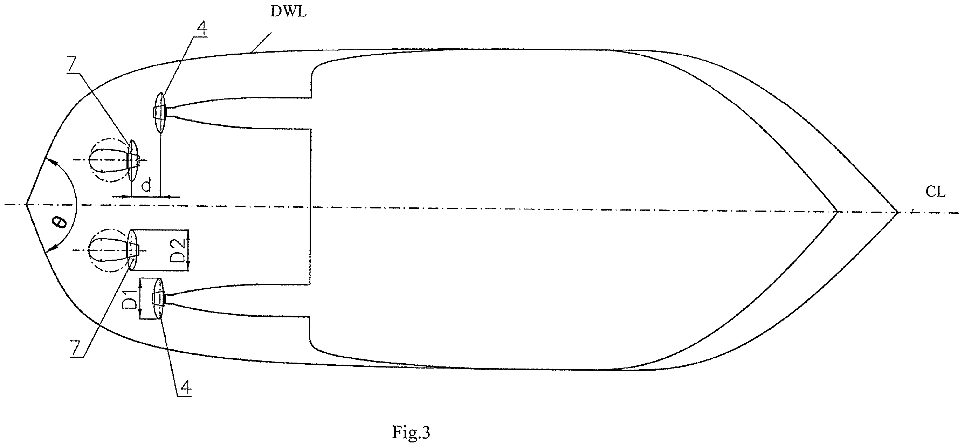

The essence of the proposed invention is illustrated with drawings, where:
- Fig.1 - schematic representation of proposed icebreaker intended for operation in shallow freezing water;
- Fig.2 - view to the ship of Fig.1 from the stern;
- Fig.3 - view to the ship of Fig.1 from the bottom.
The icebreaker (Fig.1, 2, 3) has the hull 1 with stern hangout 2 fitted with ice protection shield 3, steering/propulsion system placed in the stern hangout 2 and comprised of two conventional side ship propulsors 4 mounted on the shafts 5 and two 360-degree azimuth thrusters 6 with propellers 7 installed on the ship's hull 1.
The stern hangout 2 is of wedged shape with wedge angle θ along the DWL 90° ≤ θ ≤ 180° (Fig.3) and the surface inclined at an angle α ≥ 30° to the vertical (Fig.1).
The ice protection shield 3 has such a height at the stern that the distance h between the lower edge of the shield 3 and axis of rotation of propeller 7 of AZT 6 (Fig.1, 2) is at least half the radius (a quarter of diameter D₂) of propeller 7of the AZT 6 (Fig.3). In this case the shield is placed so as to extend in the bow direction beyond the disks of ship propulsors 4 by the distance L₁ which is not greater than two diameters D₁ of ship propulsors 4 (Fig.1).
AZT units 6 are arranged symmetrically to the ship's CL displaced sternward by L₂ providing free 360-degree turn of ship's AZT 6 around its vertical axes 8 with no contact to both propulsors 4 of the ship. Moreover, the distance between the disks of AZT 6 propellers 7 and the ship propulsors 4 is not greater than the diameter D₁ of ship propulsors 4 (Fig.3).
In this case ship propulsors 4 and AZT 6 propellers 7 are arranged with regard to hull height so that the tip edges of all propulsors 4, 7 do not protrude beyond the ship's base plane 9 (Fig.1).

Principles of operation in shallow freezing water for the proposed icebreaker are described below.

When the icebreaker in running ahead in the ice field, the broken ice segments are submerged by the ship's hull 1 and form so called "ice shirt" on the surface of ship's hull. Moving along the sides and bottom of the ship the blocks of ice rise to the surface in stern area mainly from the sides. In this case, large-size ice pieces of "ice shirt" come up against conventional side propulsors 4 of the ship, which are rotating and milling the ice blocks pushing the majority of ice pieces away from AZT 6 located in the vicinity of ship's CL. As the result, the number of ice blocks coming to AZT 6 is reduced several times; in addition, after being milled and broken the ice blocks have smaller mass, that leads to reduction of ice loads on AZT 6, resulting in improved operational reliability thereof. In this case, the ice protection shield 3 protects side propulsors 4 of the ship and AZT 6 propellers 7 against the ice around the ship at maneuvering, and prevents air penetration to ship propulsors 4 and propellers 7 of AZT 6.

When the icebreaker is running astern in the ice field, the ice is broken by bending due to optimized shape of ship's aft end; this leads to reduction of power consumption for ice breaking, while the segments of ice are pushed apart and some of them are milled by pulling propellers 7 of AZT 6 at the stern hangout and pushed away beyond the hull 1 and side propulsors 4 of the ship mounted on the shafts 5. As the result, the ice is not gathering at the stern and the ship is running stable. In this case, the ice protection shield 3 efficiently breaks the ice and prevents aeration at AZT 6 propellers 7 and ship propulsors 4.

The proposed icebreaker intended for operation in shallow freezing waters offers improvement in maneuverability and icegoing capabilities when running both ahead and astern comparing preferably with prototype.

## Claims

1. The icebreaker intended for operation preferably in shallow freezing water comprising a hull (1) with sled-like stern overhang and having flat bottom and ice protection shield (3) along the perimeter of the overhang, and steering/propulsion system disposed in the overhang and comprising two side propulsors (4) mounted on the shafts (5) symmetrically to the ship's CL, and arranged with regard to hull (1) height so that the propulsor's tip edges do not protrude beyond the ship's base plane (9) and design waterline at the propellers' location, ***characterized in that*** it is fitted with two 360-degree azimuth thrusters (6) (AZT) equipped with pulling propellers (7) mounted on the AZT shafts (5) in front of their pods with blade tip edges not protruding beyond the base plane (9) and arranged symmetrically to the ship's CL displaced sternward, in such a way that the distance between the disks of AZT propellers (7) and disks of side propulsors (4) is not greater than the diameter of these propulsors (4) and the 360-degree turn of azimuth thruster about its axes with no contact to ship's propulsors (4) is provided, while the ship's stern overhang in DWL area is of wedge-type icebreaking shape with 90° - 180° wedge angle along the DWL and with its surface being inclined at no less than 30° to the vertical, and the ice protection shield (3) with wedge-shape cross section does not protrude beyond the ship's hull (1) and is formed so as to extend in the bow direction beyond the disks plane of ship's side propulsors (4) by the distance not greater than two diameters of the above-mentioned propulsors (4), and it has height (h) at which the lower edge of the shield (3) in the stern protrudes upwards from the rotation axes of AZT propellers (7) at least by half the radius of these propellers (7).

## Patentansprüche

1. Eisbrecher für den Betrieb vorzugsweise in seichtem gefrorenen Wasser mit einem Schiffsrumpf (1) mit vorbrecherartigem Vorderstevenüberhang, mit einem Flachboden, einem Eisschutzschild (3) längs des Überhangumfangs und einem Steuer- und Antriebssystem, das im Überhang angeordnet ist und das zwei Seitenantriebe (4) aufweist, die auf Wellen symmetrisch zur Schiffsmitte montiert und in Bezug auf die Höhe des Schiffsrumpfs (1) derart angeordnet sind, dass die Kippkanten der Antriebe nicht über die Basisebene (9) und die Konstruktionswasserlinie an der Stelle der Antriebsschraube des Schiffs hinausragen,
**dadurch gekennzeichnet,**
**dass** er mit zwei 360°-Azimuttriebwerken (6) (AZT) ausgerüstet ist, die mit Zugschiffsschrauben (7) versehen sind, die auf den AZT-Wellen (5) vor ihren Kapseln befestigt sind, wobei die Spitzenkantenflügel nicht über die Basisebene (9) hinausragen und symmetrisch zur zum Vordersteven laufenden Schiffsmittellinie in solcher Weise angeordnet sind, dass der Abstand zwischen den Flügeln der AZT-Schiffsschrauben (7) und den Flügeln der Schiffsseitenschrauben (4) nicht größer als der Durchmesser dieser Antriebe (4) ist und die 360°-Drehung der Azimuthtriebwerke um ihre Achsen ohne Kontakt zu den Schiffsantrieben (4) bleibt, während der Überhang des Schiffsvorderstevens im DWL-Bereich in einer Eisbrecherform vom Verkeiltyp mit einem Verkeilwinkel von 90-180° längs der DWL-Linie ausgebildet ist, deren Oberfläche nicht weniger als 30° zur Vertikalen geneigt ist und der Eisschutzschild (3) mit dem Verkeilform-Querschnitt nicht über den Schiffsrumpf (1) hinausragt und derart geformt ist, dass er sich in Bugrichtung hinter die Flügelebene der Schiffsseitenantriebe (4) mit einem Abstand ausbreitet, der nicht größer als zwei Durchmesser der oben erwähnten Antriebe (4) ist, sowie eine Höhe (h) aufweist, bei der die untere Kante des Schutzschilds (3) im Vordersteven nach oben von den Rotationsachsen der AZT-Schiffsschrauben (7) ragt, mindestens beim halben Radius dieser Schiffsschrauben (7).

## Revendications

1. Brise-glace pour l'usage préférentiellement dans une eau superficielle gelée avec une coque de navire (1), avec un porte-à-faux étrave sous forme de concasseur préalable, avec un fond plat, un bouclier de protection-glace (3) longitudinalement au porte-à-faux périphérique et un système de commande et d'actionnement qui est disposé au niveau du porte-à-faux et qui présente deux impulseurs latéraux (4) installés sur des vagues symétriquement au milieu du bateau et disposés quant à la hauteur de la coque du navire (1) de manière à ce que les plans inclinés de chargement des actionneurs ne dépassent pas le plan de masse (9) ainsi que la ligne de flottaison au niveau de la vis d'entraînement du navire,
Est caractérisé de sorte qu'
Il équipé de deux unités de propulsion azimut 360° (6) (AZT) munies de vis du bateau-train (7) montées sur les vagues AZT (5) devant ses capsules où les ailettes du bord supérieure ne dépassent pas le plan de masse (9) et sont disposées symétriquement quant à l'étrave des lignes médianes du navire de sorte que la distance entre les ailettes des vis de navire AZT (7) et les ailettes des vices latérales du navire (4) ne reste pas supérieure au diamètre de ces actionneurs (4) et que la rotation 360° des propulseurs azimut autour de ses axes soit sans contact avec les propulsions maritimes (4), tandis que le porte-à-faux de l'étrave maritime au niveau DWL est formé sous forme d'un brise-glace de type claveté avec un angle claveté de 90-180° longitudinalement à la ligne DWL dont la superficie n'est pas inférieurement inclinée à 30° vis-à-vis des verticales et que le bouclier de protection de glace (3) ne dépasse pas avec la section transversale de forme clavetée la coque du navire (1) et est formé de sorte qu'il se répande en alignement derrière le plan du battant des actionneurs latéraux maritimes (4) avec une distance qui n'est pas supérieure aux deux diamètres des deux actionneurs mentionnés (4) et présente une hauteur qui dépasse le bord inférieur du bouclier (3) dans l'étrave vers le haut des axes de rotation des vis maritimes AZT (7) au minimum dans la moitié du rayon de ces vis maritimes (7).
